# EUROPEAN PATENT APPLICATION

(11) **EP 2 770 610 A1**
(43) Date of publication of application: **27.08.2014**
(21) Application number: 13156074.0
(22) Date of filing: 21.02.2013
(51) Int. Cl.: H02K 1/02, H02K 1/12, H01F 1/42

(54) **A stator core for a rotating electrical machine and a method for construction of the rotating electrical machine**

(71) Applicant: Siemens Aktiengesellschaft, 80333 München (DE)
(72) Inventor: Banchhor, Vikas Kumar, 122001 Gurgaon (IN); Dhamija, Aman, 121010 Ghaziabad (IN); Garg, Ankit, 122015 Gurgaon (IN); Singh, Vijayendra, 122001 Gurgaon (IN)

(57) **Abstract**

The present invention relates to a stator core (80) for a stator (60) of a rotating electrical machine (50). The rotating electrical machine (50) includes a rotor (70) and the stator (60). The rotor (70) is axially arranged to rotate inside an enclosure (100) of the stator (60), during the operation of the rotating electrical machine (50). The stator core (80) is made of a non-metallic magnet, thereby reducing the core losses in the stator (60), especially core losses arising due to Eddy currents in the stator (60).

## Description

The present invention relates to the field of rotating electrical machines, and in particular to a stator core for a stator for a rotating electrical machine, and a method for construction of the rotating electrical machine comprising the stator core.

A rotating electrical machine, such as a generator or a motor, is widely used for conversion of energy from one form to another. For example, an electric generator is used to convert mechanical energy to electrical energy, whereas an electric motor is used to convert electrical energy to mechanical energy. The rotating electrical machine primarily comprises two components, viz. a rotor and a stator. The primary component the stator is a stator core. For example, in a rotating armature based rotating electrical machine, the stator can produce a magnetic field in which the rotor rotates. Whereas, in a rotating field based rotating electrical machine an armature is mounted on the stator core for tapping in the electromotive force produced thereof.

The stator core is normally constructed of soft iron or steel, which is electrically conductive as well as possesses magnetic properties that aids in responding to the varying magnetic flux produced during the operation of the rotating electrical machine, and converting the varying magnetic flux into a corresponding varying electric flux for generating electric current. In this process, Eddy currents are generated inside the stator core, which cause not only heating of the core, but also a change in the magnetic properties the stator core. This results in a huge amount of losses in the core (also termed as 'core losses'), thereby reducing the energy conversion efficiency of the rotating machine. Currently, in order to reduce the aforementioned core losses, the stator core is constructed by using stacks of thin metallic steel laminations (termed as a 'donut'). One such stator core comprising stacks of thin metallic steel laminations is recited in US 8040014. This may be beneficial in reducing the Eddy currents and the core losses resulting therewith for low frequency operations (around 60 Hz) of the electrical machine only. However, the core losses are still considerably large during high frequency operations of the electrical machine. However, a total nullification of the Eddy currents at all the operational frequencies of stator is still not achieved.

An object of the present invention is to reduce the core losses in a stator core for a stator of a rotating electrical machine.

The above object is achieved by a stator core for a stator for a rotating electrical machine according to claim 1, and a method for construction of the stator core according to claim 8.

Core losses in stator core occur primarily due to the presence of metallic magnetic components. Metallic magnetic components are required for conducting the varying magnetic flux for generation of electricity during the operation of a rotating electrical machine. However, the metallic introduce Eddy currents, which lead to core losses.

The underlying object of the present invention is to provide a stator core for a rotating electrical machine, such as but not limited to an electric generator. The stator core is such that the core losses caused due to Eddy currents are minimized. The Eddy currents can be minimized if the core is made of a non-metallic yet magnetic material.

In the present invention, the proposed stator core is constructed out of a non-metallic magnet. According to an exemplary embodiment of the present invention, the non metallic magnet is a plastic magnet. According to preferred embodiment of the present invention, the plastic magnet comprises plastic magnet comprises polyaniline tetracyanoquinodimethane (PANiCNQ).

Thus, by using non-metallic magnetic cores, such as PANiCNQ, core losses that occur due to Eddy currents are greatly minimized. This is because plastic magnets display magnetic properties, although being non-metallic, which is the desirable in conducting the varying magnetic flux during the operation of the rotating electrical machine. Furthermore, PANiCNQ is a polymer that displays magnetic properties, while still being non-metallic.

According to another embodiment of the present invention, the stator core is a monolithic unit. Therewith, it is possible to construct compact stator cores with fewer components using PANiCNQ polymers.

According to yet another embodiment of the present invention, the stator core is constructed out of a plurality of stator core plates. The stator core plates are arranged longitudinally to obtain the stator core. Herewith, it is possible to build bulky stator cores by assembling individual stator core plates. This is beneficial during transportation of the stator cores, as well as during the replacement of a particular stator core plate if the same is damaged.

The rotating electrical machine can be an electric generator or an electric motor. However, the stator core of the generator or the motor is constructed out of PANiCNQ in accordance with one of the aforementioned embodiments. Herewith, the usage of PANiCNQ stator cores is beneficial in reducing core losses in the stator core.

In a method for construction of the stator core of any of the aforementioned embodiments, firstly the non-metallic magnetic material is provided. Subsequently, the stator core is constructed out of the non-metallic magnetic material. According to the embodiments disclosed herein, the non-metallic magnetic material is a plastic magnet, preferably a PANiCNQ polymer.

The aforementioned and other embodiments of the present invention related to a stator core for a stator for a rotating electrical machine and a method for construction thereof will now be addressed with reference to the accompanying drawings of the present invention. The illustrated embodiments are intended to illustrate, but not to limit the invention. The accompanying drawings contain the following figures, in which like numbers refer to like parts, throughout the description and drawings.

The figures illustrate in a schematic manner further examples of the embodiments of the invention, in which:
- FIG 1: depicts a cross sectional view of a rotating electrical machine comprising a stator and a rotor,
- FIG 2: depicts a perspective view of a first embodiment of a stator core for the stator referred to in FIG 1,
- FIG 3: depicts a perspective view of a second embodiment of the stator core for the stator referred to in FIG 1, and
- FIG 4: depicts a flowchart of a method for construction of the stator core referred to in FIG 2 and FIG 3.

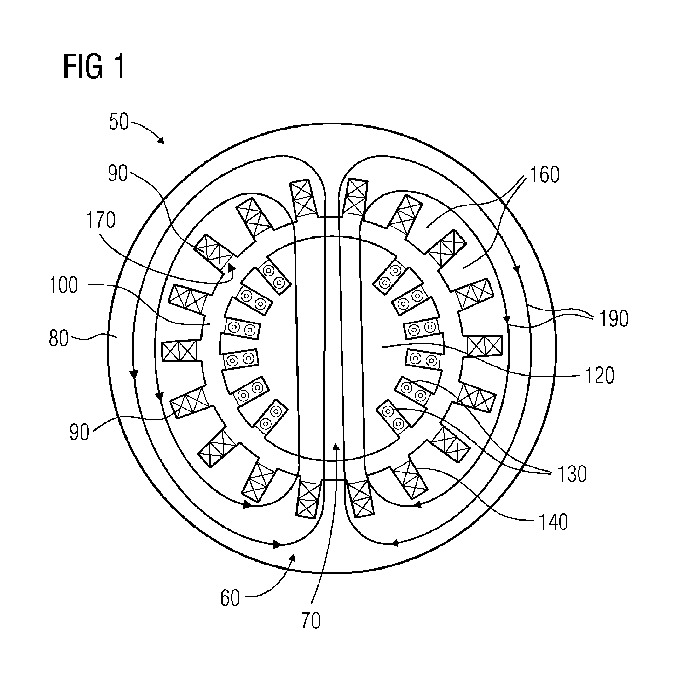

A cross-sectional view of an exemplary rotating electrical machine 50 comprising a stator 60 and a rotor 70 is depicted in FIG 1.

The rotating electrical machine 50 can be an electric generator or an electric motor. The rotating electrical machine 50 can be an alternating current (AC) based machine or a direct current (DC) based machine. Furthermore, the rotating electrical machine 50 may be a rotating armature based rotating electrical machine 50 or a rotating field based rotating electrical machine 50. Furthermore, the rotating electrical machine 50 may be a single-phase or a polyphase rotating electrical machine 50.

Hereinafter, for the purpose of explanation of the present invention, the exemplary rotating electrical machine 50 is considered to be a single phase rotating field based AC generator (hereinafter referred to as 'AC generator 50').

The stator 60 comprises a stator core 80 and an armature 90. The stator core 80 is magnetic, and the armature 90 comprises a plurality of windings (not depicted). The armature 90 is disposed on the stator core 80. The inside space of the stator core 80 forms an enclosure 100. The rotor 70 is arranged inside the enclosure 100, such that the rotor 70 can rotate axially (i.e. around the longitudinal axis 110 of the AC generator 50) inside the enclosure 100. The rotor comprises a shaft 120, and one or more electromagnets 130 mounted on the shaft 120. The combination of the rotation of the shaft 120 and the electromagnets 130 mounted thereon produces a time-varying rotating magnetic field during the operation of the AC generator 50. The time-varying magnetic field produced thereof produces a time-varying electric flux in the armature 90, thereby producing a time-varying electric current in the armature 90. Thereafter, the electric current may be provided to an external load (not depicted), such as an electric circuit or a grid.

Hereinafter, 'longitudinal axis 110' denotes the axis of rotation of AC generator 50; and the terms: 'longitudinal', "radial', and 'circumferential', thereby are to be construed with respect to the axis of rotation.

The electromagnets 130 mounted of the shaft 120 of the rotor produce the magnetic field, which is depicted by magnetic flux lines 190. The armature 90 of the stator 60 is present in the longitudinal grooves 140 of the stator core 80. The rotations of the rotor 70 inside the magnetic field cause the magnetic field to vary in a sinusoidal manner, and a corresponding sinusoidally varying EMF is produced thereof in the stator 60. The resulting AC may be drawn from the armature 90 mounted on the stator core 80. Furthermore, the number of poles of the stator 60 (i.e. the number of teeth 160 on the stator core 80), and the number of poles of the rotor 70 (i.e. the number of electromagnets 130 on the shaft 120) depends on the design of the AC generator 50.

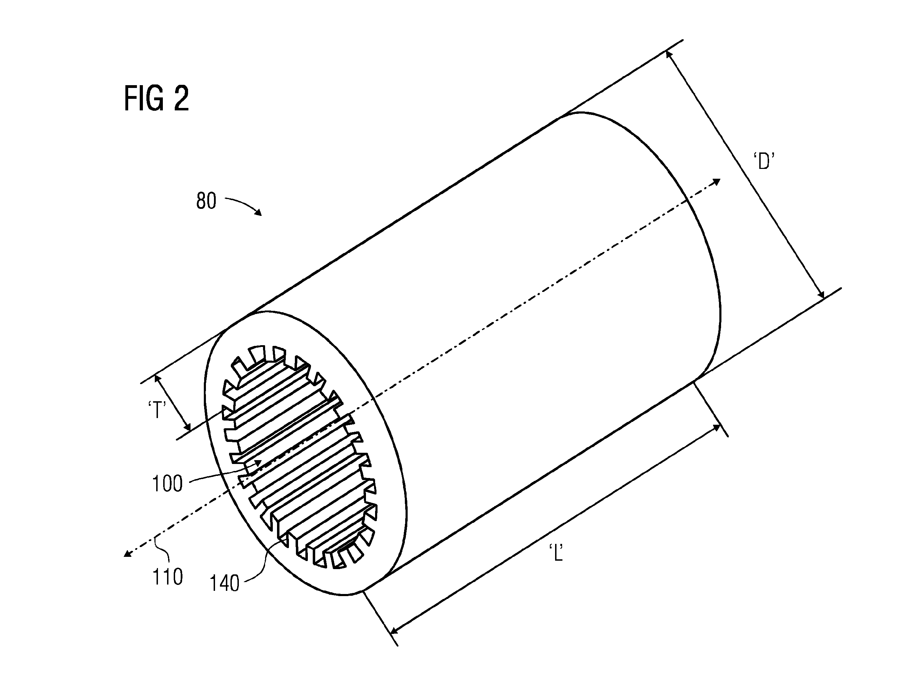

A first embodiment of the stator core 80 according to the present invention is depicted in FIG 2.

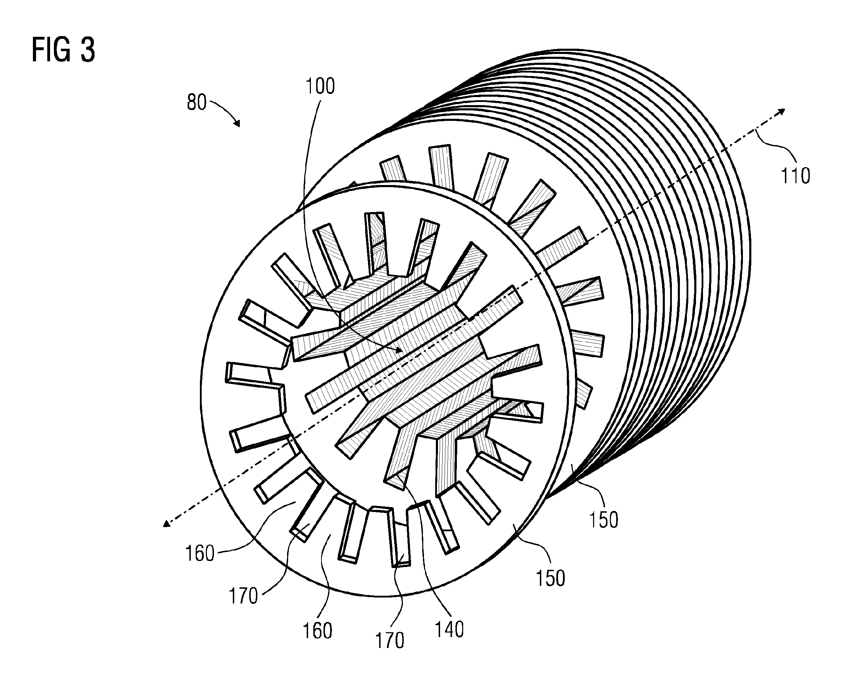

Now referring to FIG 2 along with FIG 1, it may be noted that the stator core 80 is constructed in a shape that resembles a hollow cylinder, wherein the length of the stator core 80 is 'L', the diameter of the stator core 80 is 'D', and the thickness of the stator core 80 is 'T'. The inside space of the stator core 80, i.e. the enclosure 100, accommodates the rotor 70 (not shown in FIG 3) for realising the AC generator 50. Furthermore, one or more longitudinal grooves 140 are provided on the inside of the stator core 80 for accommodating the armature 90 therein. Therewith, it is possible to effectively transfer the electromotive force (EMF), which is generated during the operation of the AC generator 50, to the external load.

According to the invention, the stator core 80 depicted in FIG 2 is a monolithic unit, i.e. it is a one-piece unit that is constructed out of a single material. Herein, the material used for the construction of the stator core 80 is indeed magnetic, but non-metallic, i.e., the stator core 80 is constructed out of a non-metallic magnet, for example a plastic magnet, according to an exemplary embodiment of the present invention.

According to a preferred embodiment of the present invention, the stator core 80 is constructed out of polyaniline tetracyanoquinodimethane (PANiCNQ). PANiCNQ is a plastic magnet made out an organic polymer. PANiCNQ is made by combining emeraldine-based polyaniline (PANi) with tetracyanoquinodimethane (TCNQ). The TCNQ is a free radical forming acceptor molecule, and when PANi is combined therewith, the resulting PANiCNQ can act as a non-metallic magnet. PANiCNQ is a magnetically conductive polymer, and displays magnetic characteristics. The magnetic properties can be attributed to the pi-conjugated nitrogen-containing backbone combined with molecular charge transfer side groups. These properties cause the PANiCNQ molecule to have a high density of localized spins that can give rise to coupling of their magnetic fields.

Since the stator core 80 comprising PANiCNQ is magnetic in nature, the stator core 80 is capable of conducting the varying magnetic field produced by the rotor 70 during the operation of the AC generator 50. Thus, it fulfills the same function as a metallic, laminated stator core known from prior art. However, the stator core 80 is electrically insulative, and therewith no Eddy currents are produced in the stator core 80 during the operation of the AC generator. Therewith, the core losses in the AC generator 50 arising due to Eddy currents in the stator core are strongly reduced and in principle nullified, respectively, thereby increasing the efficiency of the AC generator 50.

A second embodiment of the stator core 80 according to the present invention is depicted in FIG 3.

Now referring FIGS 1 and 2 along with FIG 3, it may be noted that the stator core 80 according to a further developed embodiment of the present invention comprises a plurality of stator core plates 150 (hereinafter referred to as 'core plates 150'). The stator core plates 150 are circular and are arranged next to each other in the longitudinal direction, i.e. in the direction along the axis of rotation 110, in order to form the stator core 80. Herein, each of the core plates 150 is constructed out of a plastic magnet as described above, and preferably constructed out of PANiCNQ. By first producing separate stator core plates 150 and subsequently assembling them to the final stator core 80, it is possible to construct massive stator cores comprising PANiCNQ, and the process to construct the same is simplified.

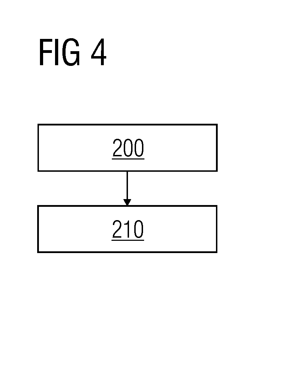

It may be noted herein that each of the core plates 150 comprises a plurality of radial teeth 160. A slot 170 exists between two adjacent teeth 160. When the core plates 150 are longitudinally arranged to form the stator core 80 according to the embodiment depicted in FIG 4, the corresponding teeth 160 of two neighbouring core plates 150 are aligned such that the slot 170 between the respective teeth 160 of the two neighbouring core plates 150 extends uniformly and in the direction along the axis of rotation 110. I.e., the corresponding slots 170 of the core plates 150 extend to form a longitudinal groove 140 of the stator core 80. The longitudinal groove 140 thereby formed is beneficial in accommodating the aforementioned armature 90 of the stator 60. Furthermore, once the core plates 150 are arranged, the core plates 150 may be secured together by a fastening means (not depicted). For example, fastening may be achieved by providing through holes in two neighbouring core plates 150, and inserting a bolt though the through holes and tightening the bolt by means of a nut, in order to secure the two neighbouring core plates 150.

With respect to the aforementioned embodiments of the stator core 80 depicted in FIG 2 and FIG 3, it may be noted herein that the specific shape of the stator core 80 and the core plates 150, respectively, comprising PANiCNQ may be obtained by means of any of the well known techniques, such as molding, casting, or sintering, et cetera.

A flowchart of a method for construction of the AC generator 50 is depicted in FIG 4.

Herein the method is summarized in a sequential and step wise manner, whereas the elements required for realising the method and the respective functions thereof are already explained with reference to FIGS 1 to 3.
In step 200, the non-metallic magnetic material is provided. The non-metallic magnetic material is PANiCNQ according to the preferred embodiment.

In step 210, the stator core is constructed out of PANiCNQ. The stator core 80 may either be a monolithic unit as depicted in FIG 2, or alternatively be made of the plurality of stator core plates 150 as depicted in FIG 3. Herewith, a stator core 80 that is capable of strongly reducing core losses caused due to Eddy currents is obtained.

Herewith, by means of steps 200 and 210, the stator core comprising the non-metallic magnetic core comprising PANiCNQ polymer is constructed.

Though the invention has been described herein with reference to specific embodiments, this description is not meant to be construed in a limiting sense. Various examples of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A stator core (80) for a stator (60) for a rotating electrical machine (50),
**characterised in that** the stator core (80) is made of a non-metallic magnet.

2. The stator core (80) according to claim 1,
wherein the non-metallic magnet is a plastic magnet.

3. The stator core (80) according to claim 2,
wherein the plastic magnet comprises polyaniline tetracyanoquinodimethane (PANiCNQ).

4. The stator core (80) according to any of the claims 1 to 3,
wherein the stator core (80) is a monolithic unit.

5. The stator core (80) according to any of the claims 1 to 3,
wherein the stator core (80) consists of a plurality of stator core plates (150),
wherein the stator core plates are arranged in a direction along a longitudinal axis of the stator core.

6. An electric generator comprising the stator core (80) according to any of the claims 1 to 5.

7. An electric motor comprising the stator core (80) according to any of the claims 1 to 5.

8. A method for construction of a stator core (80) for a stator (60) for a rotating electrical machine (50), the method comprising:
- a step of providing (200) a non-metallic magnet material,
- a step of constructing (210) the stator core (80) out of the non-metallic magnet material.

9. The method according to claim 8,
wherein the non-metallic magnetic material is a plastic magnet.

10. The method according to claim 9,
wherein the plastic magnet comprises polyaniline tetracyanoquinodimethane (PANiCNQ).

11. The method according to any of the claims 8 to 10,
wherein the stator core (80) is constructed out of the non-metallic magnet material as a monolithic unit.

12. The method according to any of the claims 8 to 10,
wherein the stator core (80) is formed by a plurality of stator core plates (150), wherein each of the stator core plates (150) are constructed out of the non-metallic magnetic material.
